# EUROPEAN PATENT SPECIFICATION

(11) **EP 1 749 160 B1**
(45) Date of publication and mention of the grant of the patent: **26.09.2007**
(21) Application number: 05751053.9
(22) Date of filing: 27.05.2005
(51) Int. Cl.: F16H 57/04, F28F 3/12

(54) **INDUSTRIAL GEAR UNIT**
INDUSTRIEANTRIEBSEINHEIT
UNITE D'ENGRENAGES INDUSTRIELLE

(30) Priority: 27.05.2004 GB 0411870
(43) Date of publication of application: 07.02.2007
(73) Proprietor: HANSEN TRANSMISSIONS INTERNATIONAL NV, 2650 Edegem (BE)
(72) Inventor: LEIMAANN, Dirk-Olaf, B-2650 Edegem (BE)
(74) Representative: Donné, Eddy
(86) International application number: PCT/BE2005/000086
(87) International publication number: WO 2005/116491

(56) References cited:
- EP-A- 0 853 225
- DE-A1- 4 212 243
- US-A- 5 906 236

## Description

This invention relates to an industrial gear unit and in particular, though not exclusively, to a gear unit having a water coolant device which enables a flow of water coolant to remove heat from the housing of the gear unit.

Industrial type gear units operate typically over a wide range of power ratings and particularly when a gear unit is operating close to its maximum designed power rating friction loses within the gear unit can generate a significant heating effect.

Although the lubricating oil commonly used for lubrication of the gear unit assists in transferring heat away from the heat generating friction surfaces within the gear unit, the capacity for heat transfer via the lubricating oil is limited. The lubricating oil will transmit heat to the gear unit housing and the ability of the oil to remove heat from the friction surfaces will depend in part on the extent to which heat is removed from the housing, for example by free convection of air externally of the housing. Commonly, however, it is found that convection of air is not adequate to remove heat sufficiently quickly to avoid unduly high temperatures arising within the gear unit. To avoid that problem and potential deterioration of lubricating effect it is known to employ cooling fans which direct a forced flow of air to the outside of the gear unit housing thereby to improve the temperature gradient between the friction generating surfaces within the gear unit and the gear unit housing.

In contrast to providing an external forced flow of cooling air it is known also to provide cooling coils within the gear unit and through which water may be circulated to cool the oil within the gear unit. In another alternative the lubricating oil is pumped through an external heat exchanger. Yet another proposal comprises providing a specially constructed housing having two walls between which cooling water may flow.

Whilst the provision of a forced air flow is relatively cheap, it is not so effective as, for example, the provision of cooling coils or rings. However the provision of cooling coils does suffer the disadvantage of a potential risk of cooling water leaking into the lubricating oil, with potentially serious consequences to the ability of the lubricating oil to provide effective lubrication. The risk of water leakage may be avoided by forced circulation of the oil through an external heat exchanger, or provision of a twin walled housing, but such solutions are relatively expensive.

An industrial gear unit having the features of the preamble of claim 1 is known from EP-A-0 853 225.

The present invention seeks to provide a gear unit having an improved means for achieving effective cooling of the housing of the gear unit.

This is achieved by an industrial gear unit according to claim 1.

The invention is particularly applicable to gear units and water coolant devices suitable for use with housings of gear units which have a capacity rating of at least 373 Joules/per sec (0.5 horsepower).

The water coolant device preferably comprises a cooling surface which is provided with ribs or other formations of a substantially non-planar type thereby to increase the cooling surface area of the inside or outside surface of the water coolant. Additionally the gear unit housing may be provided with ribs or like formations to provide an enhanced heat transfer capability to water contained by the water coolant.

The inner surface of the water coolant device, being that which, in use, is exposed to the cooling water, may be selectively profiled thereby selectively to guide the flow of cooling water in a preferential manner in which there is positive flow of cooling water over substantially the whole of that part of the gear unit housing surface over which the water coolant device extends. This assists to avoid stagnation points at which there would be no flow and effective removal of thermal energy.

Similarly the housing may be provided with ribs or like formations for the purpose of selectively directing the flow of cooling water.

The present invention teaches that preferably at least a part of the water coolant device is adapted to be secured to that part of a gear unit housing which, in a non-operative state of the gear unit, lies below the recommended level of oil in the gear unit housing. Alternatively or additionally, if the gear unit housing is of a construction in which, in use, a zone of the housing tends to be subjected to a forced spray of lubricating oil from rotating components within the gear unit housing, said water coolant device may be positioned substantially wholly or in part adjacent that part of the gear unit housing, externally thereof.

The present invention further teaches that the water coolant device may be secured to the housing by means of at least one clamp which may engage with a location formation provided on the gear unit housing. Thus the need for special machining of the gear unit housing, for example to provide screw-threaded apertures, may be avoided.

The water coolant device may be formed from, for example, sheet metal and said sheet material may have been subject to a stamping operation or like process to form the aforedescribed ribs or like non-planar formations.

Alternatively the water coolant device may be formed by moulding or casting of a material such as cast iron, other metallic material or a plastics material.

The present invention teaches that the water coolant device may have a contact surface, such as a peripheral sealing surface, which has a shape profile slightly different from that of a potentially confronting surface region of the gear unit housing, but which conforms to said surface of the gear unit housing when the water coolant device is brought to bear against the housing. Thus it is envisaged that the water coolant device may be elastic and deformable such that tightening of clamps to secure the water coolant device to the housing also results in at least a part of the water coolant device being elastically deformed in a manner which assists in providing firm contact between the water coolant device and housing and to resist effects of vibrations arising in use of the gear unit.

In the case of an open-sided type of water coolant device which defines a peripheral sealing surface that elastic deformation assists in providing a good compression of any sealing material or component provided between the casing member and gear unit housing. It is believed, in particular, that the provision of an open-sided type of water coolant device of a kind which becomes elastically deformed when secured to the housing of the gear unit has the advantage of providing enhanced resistance to leakage when subject to vibrations arising in use of the gear unit.

From the foregoing it will be understood that whilst the present invention envisages that typically the water coolant device shall define only part of a chamber through which cooling water may flow, with the remainder of the chamber being defined for example by the housing of a gear unit, the invention teaches also that the water coolant device may substantially wholly define the chamber. In that case it is preferred that the part of the water coolant device which confronts the housing of the gear unit shall be of a shape which closely corresponds with that of the housing thereby to facilitate a good transfer of thermal energy by conduction from the housing to the water coolant device.

The mutually confronting surfaces of the gear unit housing and the water coolant device may each be machined surfaces or one or each of said surfaces may be rough as cast, or as moulded.

Embodiments of the present invention will now be described, by way of example only, with reference to the accompanying diagrammatic drawings in which :-
Figures 1A and 1B show respectively a side view and section on the line A-A of Figure 1A of a gear unit housing and water coolant device in accordance with one embodiment of the present invention;
Figures 2A and 2B show respectively views similar to those of Figures 1A and 1B for another embodiment of the present invention;
Figures 3A, B and C show respectively plan, side and end views of a water coolant device in accordance with another embodiment;
Figures 4A and 4B show respectively a sectional view on the line A-A of Figure 4B and a plan view of part of a water coolant device and gear unit housing constructed in accordance with a further aspect of the present invention;
Figures 5A and 5B show features of assembly of a water coolant device to a gear unit housing;
Figures 6A, B, C and D show respectively perspective, plan, end and section on a line X-X of Figure 6B of a water coolant device in accordance with yet another aspect of the present invention, and
Figure 7 shows the water coolant device of Figure 6 in situ secured to the sump region of a gear unit housing.

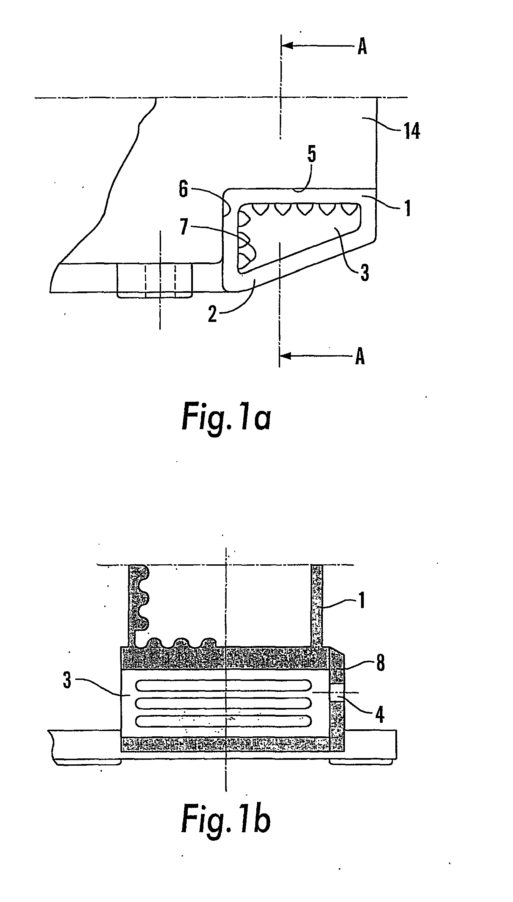

Figure 1 shows part of an assembly of a gear unit housing 14 having a water coolant device 1 secured thereto. The water coolant device 1 comprises a casing wall structure 2 which defines a chamber 3 through which coolant water may be circulated via an inlet port 4 in an end plate 8, and exit via an outlet port (not shown). The casing 2 is shaped to have surfaces 5 and 6 which conform to and bear closely against the confronting surface regions of the gear unit housing 14. The inner regions of the casing, internally of the parts of the casing which confront the regions 5 and 6, are provided with rib structures 7 which assist in enhancing heat transfer.

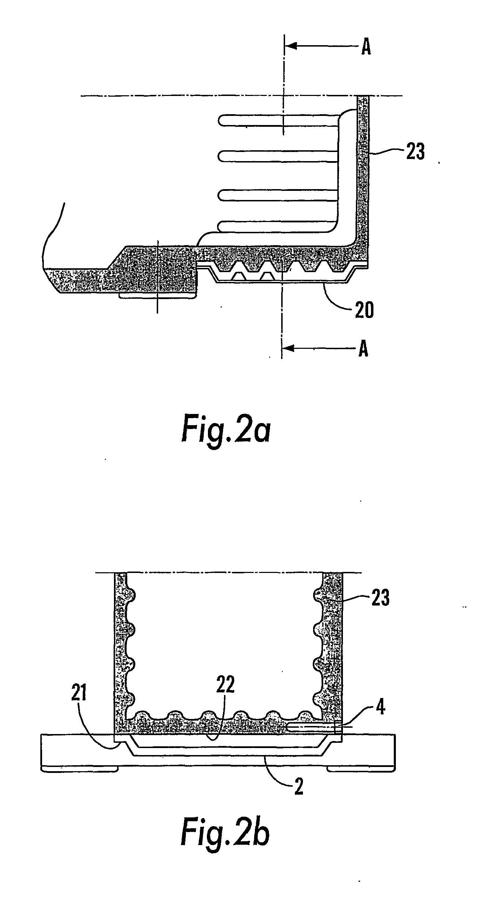

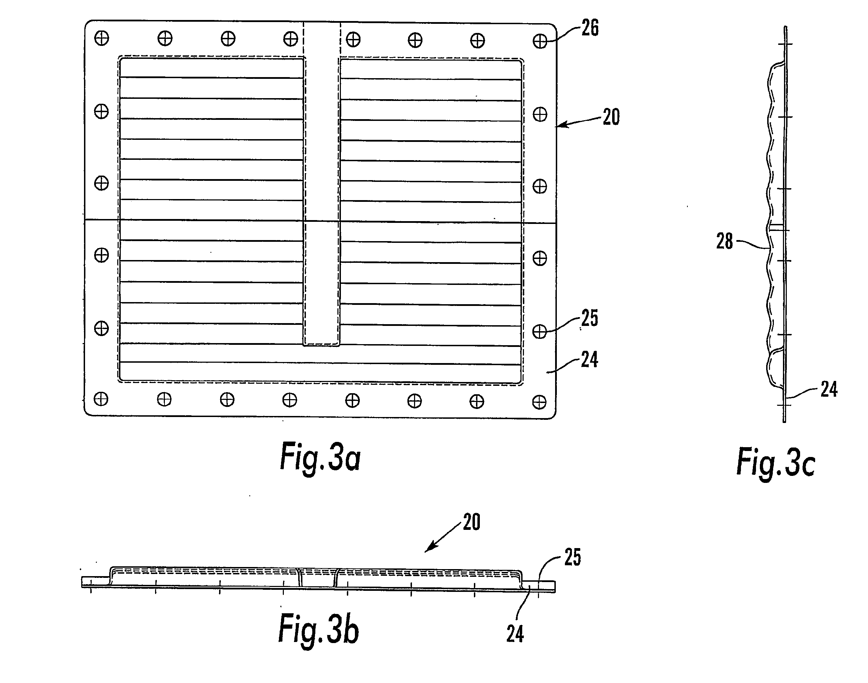

In the construction of Figures 2A and 2B the water coolant device comprises a casing member 20 having a peripheral sealing region 21 which confronts and sealingly bears against a lower surface 22 of part of a gear unit housing 23. The casing member 20 is shown in more detail in Figures 3A, B and C. The casing member 20 is formed from pressed sheet metal and has a peripheral sealing region 24 which is provided with a plurality of apertures 26 to enable the casing member 20 to be secured to a gear unit housing by means of screws (not shown). The casing member is provided with rib-like formations 28 which are positioned to preferentially direct flow of coolant.

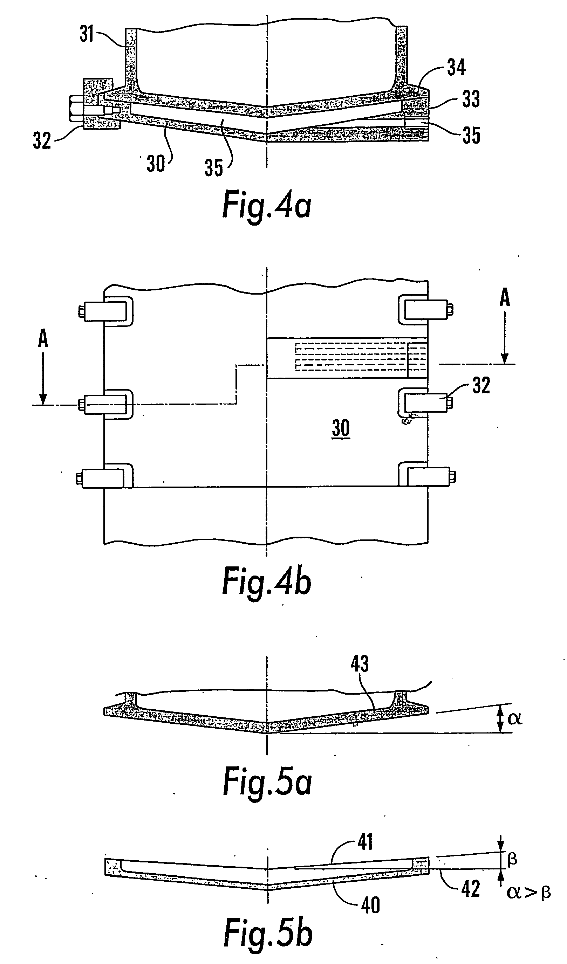

Figures 4A and 4B show a casing member 30 secured to a gear unit housing 31 by means of a plurality of peripheral clamps 32. The clamps act between an edge region 33 of the water coolant casing member and a rib 34 at the sump region of the gear unit housing 31. The casing member 30 is provided with an inlet port through which coolant water may flow into a chamber 35 defined between the casing member 30 and the housing 31. A sealing gasket (not shown) is provided between the peripheral region 33 of the casing member and the confronting member of the housing 31.

Figures 5A and 5B show a further feature which may be employed in the context of the construction shown in Figure 4. The casing member 40 shown in Figure 5B has a sealing surface 41 the angles of parts of which lie inclined to the planar direction 42 at an angle les's than the angle beta corresponding surface angle alpha of a part of the gear unit housing 43 to which the casing member 40 is to be fitted (see Figure 5A). When the clamps 32 are employed to secure the outer edge regions of the casing member (as viewed in Figure 5B) to the gear unit housing 43 the casing member 40 becomes elastically deformed and bears tightly in a fluid tight manner against the confronting surfaces of the housing 43 thereby to achieve a good compression seal.

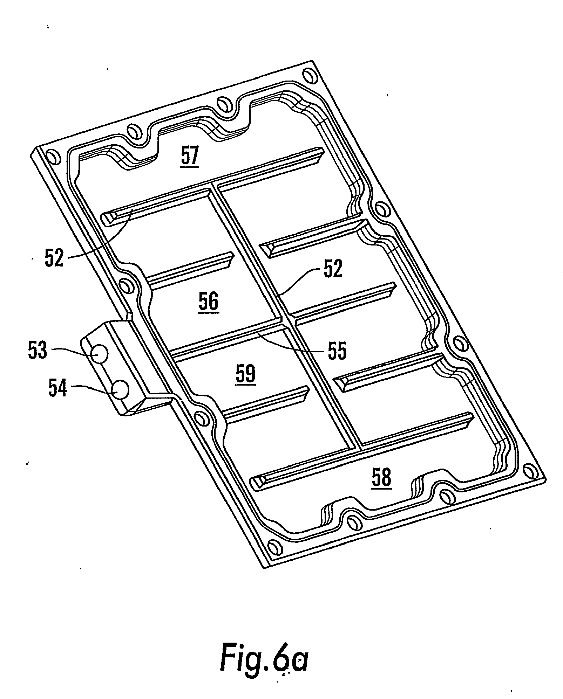

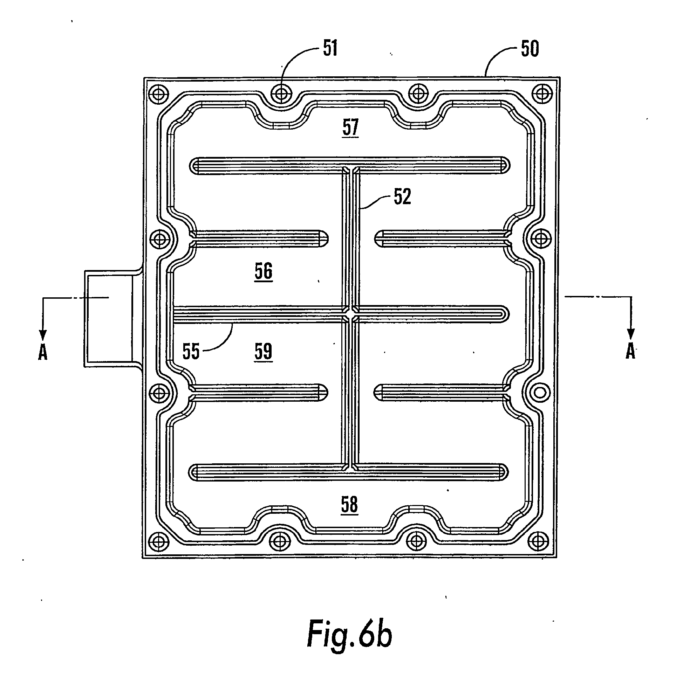

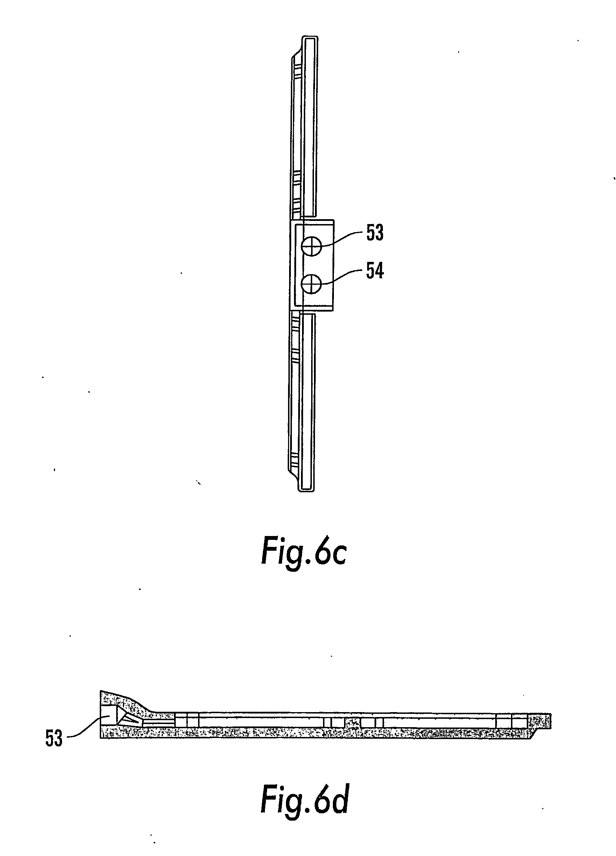

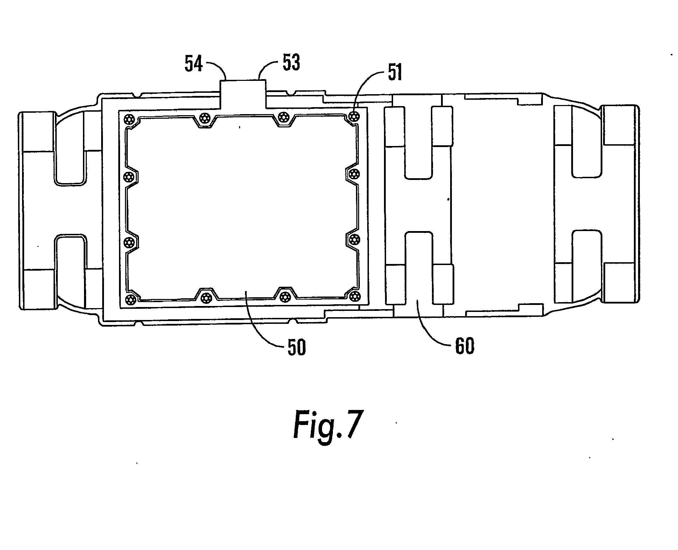

Figures 6A to 6D show another casing member 50 of a cast metal construction and provided with a plurality of peripheral apertures 51 whereby it may be secured by retention screws to a gear unit housing. The casing member comprises a plurality of internal rib formations which provide a tortuous path for flow of fluid. A water inlet 53 communicates with a zone 56 and water then flows in a tortuous manner from the zone 56 via end 57 and then to the other end 58 before flowing onwards to the zone 59. Zone 59 is separated from zone 56 by a rib 55 that extends continuously from between the aforementioned inlet port 53 and an outlet port 54 to a lengthwise extending rib 52. Figure 7 shows the aforedescribed casing member 50 secured to the sump region at the underside of a gear unit housing 60.

From the foregoing it will be understood that the present invention provides an effective and economic means by which cooling can be achieved.
Furthermore that is achieved without any significant risk of cooling water entering the gear unit housing and contaminating the lubricating oil.

## Claims

1. An industrial gear unit comprising a housing (31) which contains lubricated gear components, **characterised in that** it comprises an open-sided type of water coolant device which consists mainly of a casing member (30,40); fluid inlet and outlet ports; and removable retention means (32), which secures the water coolant device to the housing (31,43): wherein said water coolant device defines only part of a fluid chamber (35) and comprises a peripheral sealing surface (41) which engages the gear unit housing (31,43) thereby in combination with the housing (31,43) to define a fluid chamber (35) in which cooling water may be contained or flow between said inlet and outlet ports.

2. A gear unit according to claim 1, wherein, a sealing material or gasket is provided between the peripheral sealing surface (41) of the water coolant device (40) and the gear unit housing (43).

3. A gear unit according to claim 1 or claim 2, wherein, by securing the water coolant device (30) to the housing (31) with the retention means (32), a compression of the sealing material or gasket is achieved.

4. A gear unit according to any of the preceding claims, wherein, prior to assembly with the gear unit housing, the water coolant device (40) has a shape profile different from that of the confronting surface of the gear unit housing (43) and is deformable to a shape in which it conforms to said confronting surface of the gear unit housing when the retention means (32) acts to secure the water coolant device (40) to the housing (43).

5. A gear unit according to claim 4, wherein the deformation of the water coolant device (40) assists in providing a compression of the sealing material or gasket between the water coolant device (40) and the gear unit housing (43).

6. A gear unit according to claim 1, wherein the gear unit has a capacity rating of at least 373 joules/per sec (0.5 horsepower).

7. A gear unit according to claim 1 and claim 2, wherein the retention means (32) secures at least part of the water coolant device (30) to that part of the gear unit housing (31) which is below the level of lubricating oil within the housing when the gear unit is in a non-operative state.

8. A gear unit according to any one of the preceding claims, wherein, in use of the gear unit, the gear components cause lubricant to impact a zone of the housing and wherein at least part of said water coolant device is secured to said zone of the housing, externally thereof.

9. A gear unit according to any one of the preceding claims, wherein the gear unit housing comprises a location formation (34) and the retention means (32) comprises a clamp which co-operates with the location formation to secure the water coolant device (30) to the gear unit housing.

10. A gear unit according to any one of the preceding claims, wherein the water coolant device (20) comprises a non-planar formation (28) to increase the internal and external heat transfer surface area of the water coolant device.

11. A gear unit according to any one of the preceding claims, wherein an internal surface region of the gear unit housing internal of the part of the housing which defines an external contact surface is provided with non-planar formations to increase the heat transfer surface area.

12. A gear unit according to any one of the preceding claims, wherein the water coolant device comprises internal formations (55,52) to selectively guide the flow of cooling water between said Inlet (53) and outlet (54) ports.

13. A gear unit according to claim 11, wherein the external surface of the gear unit housing comprises a contact zone for contact by said peripheral sealing surface formation which in combination with the water coolant device serve to selectively guide the flow of cooling water between said inlet and outlet ports.

## Patentansprüche

1. Industrieantriebseinheit, bestehend aus einem Gehäuse (31), das geschmierte Antriebsbauteile enthält, **dadurch gekennzeichnet, dass** es eine Wasserkühlvorrichtung mit offenen Enden umfasst, die im Wesentlichen aus einem Ummantelungselement (30, 40); Flüssigkeitsein- und -auslassanschlüssen; und entfernbaren Haltemitteln (32) zum Befestigen der Wasserkühlvorrichtung am Gehäuse (31,43); wobei diese Wasserkühlvorriichtung nur einen Teil einer Flüssigkeitskammer (35) definiert und eine Umfangsdichtungsoberfläche (41) umfasst, in Eingriff mit dem Gehäuse (31,43) der Antriebseinheit ist und **dadurch** in Kombination mit dem Gehäuse (31,43) eine Flüssigkeitskammer (35) definiert, in der Kühlwasser enthalten sein ann oder zwischen den beschriebenen Ein- und Auslassöffnungen strömen kann.

2. Antriebseinheit nach Anspruch 1, wobei ein Dichtungsmaterial oder eine Dichtung zwischen der Umfangsdichtungsobrfläche (41) der Kühlwasservorrichtung (40) und dem Gehäuse (43) der Antriebseinheit bereitgestellt ist.

3. Antriebseinheit nach Anspruch 1 oder 2, wobei durch Befestigen der Wasserkühlvorrichtung (30) am Gehäuse (31) mit den Haltemitteln (32) eine Kompression des Dichtungsmaterial oder der Dichtung erzielt wird.

4. Antriebeseinheit nach einem der vorhergehenden Ansprüche, wobei vor dem Zusammenbau mit dem Gehäuse der Antriebseinheit die Wasserkühlvorrichtung (40) eine andere Profilform aufweist als die der gegenüber liegenden Oberfläche des Gehäuses (43) der Antriebseinheit und sich in eine Form deformieren lässt, die der beschriebenen gegenüber liegenden Oberfläche des Gehäuses der Antriebseinheit entspricht, wenn die Haltemittel (32) für die Befestigung der Wasserkühlvorrichtung (40) am Gehäuse (43) sorgen.

5. Antriebseinheit nach Anspruch 4, wobei die Deformation der Wasserkühlvorrichtung (40) hilft, für eine Kompression des Dichtungsmaterials oder der Dichtung zwischen der Wasserkühlvorrichtung (40) und dem Gehäuse (43) der Antriebseinheit zu sorgen.

6. Antriebseinheit nach Anspruch 1, wobei die Antriebseinheit eine Nennleistung von mindestens 373 Joule/Sek. (0,5 Pferdestärken) hat.

7. Antriebseinheit nach Anspruch 1 und Anspruch 2, wobei die Haltemittel (32) mindestens einen Teil der Wasserkühlvorrichtung (40) an dem Teil des Gehäuses (31) der Antriebseinheit befestigen, der, wenn die Antriebseinheit nicht in Betrieb ist, unter dem Füllstand des Schmieröls im Gehäuse liegt.

8. Antriebseinheit nach einem der vorhergehenden Ansprüche, wobei, wenn die Antriebseinheit in Betrieb ist, die Antriebsbauteile bewirken, dass Schmiermittel sich auf eine Zone des Gehäuses auswirkt, und wobei mindestens ein Teil der Wasserkühlvorrichtung extern an der Zone des Gehäuses befestigt ist.

9. Antriebseinheit nach einem der vorhergehenden Ansprüche, wobei das Gehäuse der Antriebseinheit ein Sitzgebilde (34) umfasst und die Haltemittel (32) eine Klammer umfassen, die mit dem Sitzgebilde zusammenarbeiten, um die Wasserkühlvorrichtung (30) am Gehäuse der Antriebseinheit zu befestigen).

10. Antriebseinheit nach einem der vorhergehenden Ansprüche, wobei die Wasserkühlvorrichtung (20) ein nicht-ebenes Gebilde (28) umfasst, um den inneren und äußeren Oberflächenbreich für die Wärmeübertragung der Wasserkühlvorrichtung zu vergrößern.

11. Antriebseinheit nach einem der vorhergehenden Ansprüche, wobei ein innerer Oberflächenbereich des Gehäuses der Antriebseinheit des Teils des Gehäuses, der eine äußere Kontaktoberfläche definiert, mit nicht-ebenen Gebilden zum Vergrößern des Oberflächenbereichs für die Wärmeübertragung versehen ist.

12. Antriebseinheit nach einem der vorhergehenden Ansprüche, wobei die Wasserkühlvorrichtung innere Gebilde (53,52) umfasst, um selektiv den Kühlwasserstrom zwischen den Einlass- (53) und Auslassanschlüssen (54) zu leiten.

13. Antriebsenheit nach Anspruch 11, wobei die Außenoberfläche des Gehäuses der Antriebseinheit eine Kontaktzone für den Kontakt durch das Oberflächengebilde der Umfangsdichtung umfasst, dqs in Kombination mit der Wasserkühlvorrichtung dafür sorgt, den Kühlwasserstrom zwischen den Ein- und Auslassanschlüssen zu leiten.

## Revendications

1. Entraînement industriel par engrenages comprenant un logement (31) qui contient des composants d'engrenages lubrifiés, **caractérisé en ce qu'**il comprend un dispositif de refroidissement par eau du type ouvert sur un côté, qui est constitué principalement d'un membre (30, 40) faisant office de carter ; des orifices d'entrée et de sortie pour fluide ; et un moyen de rétention amovible (32) qui fixe le dispositif de refroidissement par eau au logement (31, 43) ; dans lequel ledit dispositif de refroidissement par eau définit seulement une partie d'une chambre pour fluide (35) et comprend une surface d'étanchéité périphérique (41) qui entre en contact avec le logement de l'entraînement par engrenages (31, 43) pour ainsi, en combinaison avec le logement (31, 43), définir une chambre pour fluide (35) dans laquelle de l'eau de refroidissement peut être contenue ou peut s'écouler entre lesdits orifices d'entrée et de sortie.

2. Entraînement par engrenages selon la revendication 1, dans lequel on prévoit une matière d'étanchéité ou un joint statique entre la surface d'étanchéité périphérique (41) du dispositif de refroidissement par eau (40) et le logement (43) de l'entraînement par engrenages.

3. Entraînement par engrenages selon la revendication 1 ou 2, dans lequel, en fixant le dispositif de refroidissement par eau (30) au logement (31) avec le moyen de rétention (32), on obtient une compression de la matière d'étanchéité ou du joint statique.

4. Entraînement par engrenages selon l'une quelconque des revendications précédentes, dans lequel, avant le montage avec le logement de l'entraînement par engrenages, le dispositif de refroidissement par eau (40) possède un profil de configuration différent de celui de la surface opposée du logement (43) de l'entraînement par engrenages et qui peut être déformé pour prendre une configuration par laquelle il épouse la forme de ladite surface opposée du logement de l'entraînement par engrenages lorsque le moyen de rétention (32) agit pour fixer le dispositif de refroidissement par eau (40) au logement (43).

5. Entraînement par engrenages selon la revendication 4, dans lequel la déformation du dispositif de refroidissement par eau (40) favorise le fait de procurer une compression du joint statique ou de la matière d'étanchéité entre le dispositif de refroidissement par eau (40) et le logement (43) de l'entraînement par engrenages.

6. Entraînement par engrenages selon la revendication 1, dans lequel l'entraînement par engrenages possède une puissance nominale d'au moins 373 J/sec (0,5 cheval-vapeur).

7. Entraînement par engrenages selon la revendication 1 ou 2, dans lequel le moyen de rétention (32) fixe au moins une partie du dispositif de refroidissement par eau (30) à la partie du logement (31) de l'entraînement par engrenages, qui est située en dessous du niveau de l'huile de graissage au sein du logement lorsque le l'entraînement par engrenages est à l'état de repos.

8. Entraînement par engrenages selon l'une quelconque des revendications précédentes, dans lequel, lors de l'utilisation de l'entraînement par engrenages, les composants d'engrenages font en sorte que le lubrifiant entre en contact avec une zone du logement et dans lequel au moins une partie dudit dispositif de refroidissement par eau est fixée à ladite zone du logement, à l'extérieur de ce dernier.

9. Entraînement par engrenages selon l'une quelconque des revendications précédentes, dans lequel le logement de l'entraînement par engrenages comprend une structure de localisation (34) et le moyen de rétention (32) comprend un collier de serrage qui coopère avec la structure de localisation pour fixer le dispositif de refroidissement par eau (30) au logement de l'entraînement par engrenages.

10. Entraînement par engrenages selon l'une quelconque des revendications précédentes, dans lequel le dispositif de refroidissement par eau (20) comprend une structure non plane (28) en vue d'augmenter l'aire de surface de transfert de chaleur interne et externe du dispositif de refroidissement par eau.

11. Entraînement par engrenages selon l'une quelconque des revendications précédentes, dans lequel une zone de surface interne du logement de l'entraînement par engrenages, à l'intérieur de la partie du logement qui définit une surface de contact externe est munie de structures non planes pour augmenter l'aire de surface de transfert de chaleur.

12. Entraînement par engrenages selon l'une quelconque des revendications précédentes, dans lequel le dispositif de refroidissement par eau comprend des structures internes (55, 52) afin de guider de manière sélective de l'écoulement de l'eau de refroidissement entre ledit orifice d'entrée (53) et ledit orifice de sortie (54).

13. Entraînement par engrenages selon la revendication 11, dans lequel la surface externe du logement de l'entraînement par engrenages comprend une zone de contact destinée à entrer en contact avec ladite structure de la surface d'étanchéité périphérique, qui, en combinaison avec le dispositif de refroidissement par eau, sert à guider de manière sélective l'écoulement de l'eau de refroidissement entre lesdits orifices d'entrée et de sortie.
